# EUROPÄISCHE PATENTSCHRIFT

(11) **EP 2 199 354 B1**
(45) Veröffentlichungstag und Bekanntmachung des Hinweises auf die Patenterteilung: **02.03.2016**
(21) Anmeldenummer: 09177692.2
(22) Anmeldetag: 02.12.2009
(51) Int. Cl.: C09J 7/02

(54) **Verwendung eines Klebebands, insbesondere zur Verklebung optoelektronischer Bauteile**
Use of an adhesive tape, in particular for adhering optoelectronic components
Utilisation d'une bande adhésive, notamment pour le collage de composants optoélectroniques

(30) Priorität: 16.12.2008 DE 102008062131
(43) Veröffentlichungstag der Anmeldung: 23.06.2010
(73) Patentinhaber: tesa SE, 22848 Norderstedt (DE)
(72) Erfinder: Bunde, Bernd, 20253 Hamburg (DE); Burmeister, Axel, 21244 Buchholz (DE)

(56) Entgegenhaltungen:
- EP-A2- 1 090 969
- EP-A2- 2 123 420
- WO-A1-2006/050863
- WO-A1-2006/067197
- US-A1- 2008 160 242
- 'Optoelektronik' WIKIPEDIA, [Online] 06 Dezember 2008, Seiten 1 - 3, XP055052602 Gefunden im Internet: <URL:http://de.wikipedia.org/w/index.php?ti tle=Optoelektronik&oldid=53814463> [gefunden am 2013-02-06]

## Beschreibung

Die Erfindung betrifft die Verwendung eines Klebebands zur Verklebung optoelektronischer Bauteile, besonders bevorzugt von Photovoltaiklaminaten, gemäß dem Oberbegriff von Anspruch 1.

Elektronische und optoelektronische Anordnungen werden immer häufiger in kommerziellen Produkten verwendet oder stehen kurz vor der Markteinführung. Der Begriff Optoelektronik (manchmal auch Optronik oder Optotronik genannt) entstand aus der Kombination von Optik und Mikroelektronik und umfasst im weitesten Sinne alle Produkte und Verfahren, die die Umwandlung von elektronisch erzeugten Daten und/oder Energie in Lichtemission ermöglichen und umgekehrt. Derartige Anordnungen umfassen anorganische oder organische elektronische Strukturen, beispielsweise organische, metallorganische oder polymere Halbleiter oder auch Kombinationen dieser. Diese Anordnungen und Produkte sind je nach gewünschter Anwendung starr oder flexibel ausgebildet. Als technische Herausforderung für die Realisierung einer ausreichenden Lebensdauer und Funktion von (opto-)elektronischen Anordnungen im Bereich der anorganischen und/oder organischen (Opto-)Elektronik, ganz besonders im Bereich der organischen (Opto-)Elektronik ist ein Schutz der darin enthaltenen Komponenten vor Permeanten zu sehen. Permeanten können eine Vielzahl von niedermolekularen organischen oder anorganischen Verbindungen sein, insbesondere Wasserdampf und Sauerstoff.

Eine Vielzahl von (opto-)elektronischen Anordnungen im Bereich der anorganischen und/oder organischen (Opto-)Elektronik ist insbesondere gegen Wasserdampf empfindlich. Während der Lebensdauer der elektronischen Anordnung ist deshalb ein Schutz durch eine Verkapselung erforderlich, da andernfalls die Leistung über den Anwendungszeitraum nachlässt. So kann sich beispielsweise durch eine Oxidation der Bestandteile etwa bei lichtemittierenden Anordnungen wie Elektrolumineszenz-Lampen (EL-Lampen) oder organischen Leuchtdioden (OLED) die Leuchtkraft, bei elektrophoretischen Displays (EP-Displays) der Kontrast oder bei Solarzellen die Effizienz innerhalb kürzester Zeit drastisch verringern.

Ein nach dem Stand der Technik gängiger Ansatz ist deshalb, die elektronische Anordnung zwischen zwei für Permeanten, insbesondere Wasserdampf, undurchlässige Substrate zu legen. Für unflexible Aufbauten werden überwiegend Glas- oder Metallsubstrate verwendet, die eine hohe Permeationsbarriere bieten. Für flexible Anordnungen hingegen kommen Flächensubstrate wie transparente oder nicht transparente Folien zum Einsatz, die mehrlagig ausgeführt sein können. Hierbei können sowohl Kombinationen aus verschiedenen Polymeren als auch anorganische und/oder organische Schichten verwendet werden. Dabei sind für die verschiedenen Anwendungen und verschiedenen Seiten unterschiedlichste Substrate wie z.B. Folien, Gewebe, Vliese und Papiere oder Kombinationen daraus möglich.

Um bei besonders empfindlichen (opto-)elektronischen Bauteilen wie OLEDs auch eine gute Randversiegelung zu erzielen werden reaktive Klebstoffe verwendet. Ein guter Klebstoff weist eine geringe Permeabilität insbesondere gegen Sauerstoff und Wasserdampf auf, hat eine ausreichende Haftung auf der Anordnung und kann gut auf diese auffließen. Eine geringe Haftung auf der Anordnung verringert die Barrierewirkung, wenn dadurch der Eintritt von Sauerstoff und Wasserdampf an der Grenzfläche zwischen Substrat und Klebstoff ermöglicht wird. Im Gegensatz zu optoelektronischen Bauteilen, welche sauerstoffempfindliche organische Verbindungen enthalten, wird bei der Fertigung von Solarmodulen keine Randversiegelung mit einem Klebstoff oder gar ein Klebeband mit einer Barrierefolie durchgeführt, weil bis dato kein Bedarf erschien. Man ging bisher davon aus, dass keine Barriere gegen Sauerstoff benötigt wird, da die Seitenkanten des Laminats vor (Regen-)Wasser ausreichend geschützt sind, indem das Laminat am Rand mittels einer Silikondichtmasse oder einem Schaumstoffklebeband in einen Aluminiumrahmen eingeklebt wird.

Für die Verkapselung von (opto-)elektronischen Bauteilen wie OLEDs wurden bisher vor allem Flüssigklebstoffe und Adhäsive auf Basis von Epoxiden verwendet (WO98/21287 A1; US 4,051,195 A; US 4,552,604 A). Diese weisen durch eine starke Vernetzung eine geringe Permeabilität auf. Ihr Haupteinsatzgebiet sind Randverklebungen starrer Anordnungen. Eine Aushärtung erfolgt thermisch oder mittels UV-Strahlung.

Besondere optoelektronische Bauteile sind Photovoltaik-Module. Unter Photovoltaik versteht man die direkte Umwandlung von Strahlungsenergie, vornehmlich Sonnenenergie, in elektrische Energie mit Hilfe von Solarzellen. Solarzellen gibt es in verschiedenen Ausführungsformen am weitesten verbreitet sind Dickschicht-Siliziumzellen entweder als monokristalline Zellen (c-Si) oder multikristalline Zellen (mc-Si). Vermehrt Verbreitung finden Dünnschichtzellen aus amorphem Silizium (a-Si), GaAs (Galliumarsenid), CdTe (Cadmiumtellurid), CIS (Kupfer, Indium, Selen), CIGS (Kupfer, Indium, Gallium, Selen), sowie organische Solarzellen und Farbstoffzellen.

Solarzellen werden zur Energiegewinnung meist zu großen Solarmodulen, den sog. PV-Modulen verschaltet. Die Zellen werden dafür mit Leiterbahnen an Vorder- und Rückseite in Reihe geschaltet. Dadurch addiert sich die Spannung der Einzelzellen. Zudem werden die Solarzellen üblicherweise als Laminat verarbeitet, insbesondere nämlich ober- und unterseitig mit einem Barrierematerial (Glas, Folien, etc.) versehen.

Die Fertigung eines Solarmoduls erfolgt häufig mit der optisch aktiven Seite nach unten. Regelmäßig wird dabei ein entsprechendes Glas gereinigt und bereitgelegt. Bei dem Glas handelt es sich üblicherweise um eisenarmes, gehärtetes Weißglas in 3 bis 4 mm Stärke mit möglichst geringer Absorption zwischen 350 nm und 1150 nm. Auf dieses Glas kommt dann eine zugeschnittene Bahn Ethylenvinylacetat-Folie (EVA-Folie). Die Solarzellen werden mittels Lötbändchen zu einzelnen Strängen (so genannte Strings) verbunden und auf der Oberseite dieser EVA-Folie positioniert. Nun werden die Querverbinder, die die einzelnen Strings miteinander verbinden sollen und zum Ort der Anschlussdose führen, positioniert und verlötet. Anschließend wird alles nacheinander mit zugeschnittenen EVA- und Polyvinylfluorid-Folien (z.B. Tedlar™) oder einem Verbund aus EVA, Polyester und Polyvinylfluorid bedeckt. Als nächster Produktionsschritt erfolgt das Laminieren des Moduls bei einem Unterdruck von ca. 20 mbar und ca. 150°C. Beim Laminieren bildet sich aus der bis dahin milchigen EVA-Folie eine klare, dreidimensional vernetzte und nicht mehr schmelzbare Kunststoffschicht in der die Solarzellen eingebettet sind und welche fest mit der Glasscheibe und der Rückseitenfolie verbunden ist. Nach dem Laminieren werden die Kanten gesäumt, die Anschlussdose gesetzt und mit Freilaufdioden bestückt. Damit ist das Laminat fertig.

PV-Module werden aus Stabilitätsgründen mit einem Rahmen, insbesondere einem Aluminiumrahmen, versehen, welcher zum einen der Montage und zum anderen dem Schutz der PV-Module vor Bruch durch zu starke Biegung dient. Die Verbindung zwischen Rahmen und dem Laminat, welches üblicherweise das Glas, Polymerfolien, Rückseitenfolie und Solarzellen umfasst, wird beispielsweise durch die Applikation eines doppelseitigen Schaumstoffklebebandes gelöst. Dieses wird üblicherweise auf die Laminatkante verklebt und optional auch noch auf die Laminatunter- und/oder die Laminatoberseite umgeschlagen und dort angedrückt. Das so ausgerüstete Laminat wird dann mit sehr hoher Kraft in die Rahmennut gepresst. Das empfindliche Laminat ist, wie zuvor bereits beschrieben, regelmäßig an der Oberseite, also der optisch aktiven Seite, durch eine Glasschicht gegen Wasserdampf bzw. Wasser geschützt und an der Unterseite entweder durch eine zweite Glasschicht oder eine Folie bzw. einen Folienverbund mit Barrierewirkung. Die Laminatkanten sind hingegen nur durch das Schaumstoffklebeband gegen den Eintritt von Wasser geschützt. Mit wachsender Größe der PV-Module, insbesondere von nachgeführten Movermodulen, also Modulen, die mittels Motoren dem Sonnenstand nachgeführt werden, wird eine immer größere Kraft erforderlich, um die Laminate in die Rahmen zu pressen. Besonders kritisch ist das Verpressen an den Ecken des Laminats, denn bei Umschlagung oder Überlappung liegt das Klebeband hier mit doppelter Dicke vor. Beim Einpressen kann das Klebeband daher beschädigt werden, wodurch Risse im Schaum entstehen können, durch welche wiederum Regenwasser an die Laminatkante dringen kann. Dringt Wasser in das Laminat ein, kann die Haftung zwischen Glas und EVA verschlechtert werden. Es hat sich gezeigt, dass bei Modulen mit EVA-Verkapselungsfolien die Leistung des Moduls im Laufe der Zeit sinkt. Neben Vergilbung oder Trübung der EVA-Folie spielen als weitere Ursachen Korrosion der Lötverbindungen der Zellverbinder und Kriechstöme eine Rollen. Durch Feuchtigkeit wird offenbar durch Hydrolyse von EVA Essigsäure frei, welche einerseits korrosiv ist und andererseits die Leitfähigkeit erheblich erhöht. Hierdurch kann es zu elektrischen Verlusten insbesondere zwischen Laminatkante und Rahmen kommt.

Die Verbindung zwischen Rahmen und dem Laminat kann alternativ zur Verklebung mit einem Schaumstoffklebeband durch das Einbringen von vernetzbaren Silikon oder einen Flüssigklebstoff in die Rahmennut bewerkstelligt werden. Dies wiederum hat den Nachteil, dass das hervorquellende Silikon oder der Flüssigklebstoff mit Lösungmitteln aufwendig entfernt werden muss. Darüber hinaus ist der Rahmen im Fall der Beschädigung der rückseitigen Barrierefolie des Laminats nicht mehr für Reparaturarbeiten entfernbar.

Der vorliegenden Erfindung liegt damit das Problem zugrunde eine Möglichkeit zu schaffen die Kanten von Laminaten für PV-Module gleichzeitig mit dem Einkleben des Laminats vor Wasser zu schützen.

Gelöst wird diese Aufgabe durch die Verwendung eines Klebebands gemäß Patentanspruch 1. Eine Verwendung eines alternativens Klebebands zur Lösung des Problems beschreibt Patentanspruch 4. Bevorzugte Ausgestaltungen und Weiterbildungen sind Gegenstand der jeweiligen Unteransprüche.

Es wird ein Klebeband vorgeschlagen, welches sich einfach applizieren lässt und einen ähnlich guten Schutz der Laminatkante vor dem Eindringen von Wasser/-dampf gewährleistet wie die aufwendige Versiegelung mit Silikon.

Es hat sich gezeigt, dass sich ein Schaumstoffklebeband trotz der Gefahr einer Beschädigung des Schaums bei der Einrahmung zur Versiegelung eignet, sofern dieses Klebeband zusätzlich eine geeignete Barrierefolie enthält. Bei entsprechender Anordnung ist die Barrierefolie hinreichend geschützt, so dass diese in der Regel auch bei Beschädigung des mechanisch empfindlichen Schaums nicht beeinträchtigt wird und die Barrierewirkung des Klebebandes somit weiterhin gegeben ist. Entgegen aller Erwartung kann das Klebeband zudem mühelos um die Laminatecken- und kanten gelegt werden, ohne dass es zur Abhebung des Klebebandes trotz der deutlich gesteigerten Rückstellkraft kommt. Dies gilt insbesondere für die bevorzugte Applikationsform bei der die Seite mit der Barrierefolie der Laminatkante und die Seite mit dem Schaum dem Rahmen zugewandt ist.

Darüber hinaus bietet die Barrierefolie den Vorteil, dass durch diese das Klebeband insgesamt, insbesondere gegenüber Dehnung dimensionsstabiler ausgebildet ist. Dies ist insbesondere der Fall wenn die Barrierefolie bevorzugt eine Schicht aus einer verstreckten metallisierten Polyesterfolie besteht. Dies erleichtert nicht nur die Applikation des Klebebandes sondern ein solcher Überdehnungsschutz führt auch zu geringeren Verlusten durch Kriechströme. Die Ursache hierfür liegt vermutlich darin, dass ein Überdehnschutz zu präziseren Längen des Klebebandes führt. Indem Überlängen vermieden werden, können die dicken Überlappungen des Klebebandes und damit zu hohe Kräfte beim Einpressen in die Rahmennut vermieden werden. Ist hingegen das Klebeband auch geringfügig zu kurz so bilden sich an den Ecken der Modulkanten, an denen die Klebebänder aneinander stoßen, Kanäle in die das Regenwasser läuft und von wo das Wasser in die EVA-Schicht eindringen kann. Wegen der Leitfähigkeit von Regenwasser führt dies zu einem Kriechstrom zwischen Zellen und Metallrahmen über EVA-Schicht und Kanäle, wodurch elektrische Leistungsverluste auftreten.

Insbesondere war überraschend, dass durch die Verwendung von speziellen Polymerschichten der Barrierefolie mit einem geringen Durchgangswiderstand der Kriechstrom zwischen Solarzelle und dem (geerdeten) Metallrahmen erheblich zu verringern ist, selbst wenn die EVA-Schicht schon Feuchtigkeit aufgenommen hatte. Besteht die Schicht aus nicht hydrolysierbaren Polymeren so bleibt die elektrische Isolationswirkung sogar nach längerer Einwirkung von Wasser erhalten.

Das Klebeband gemäß Anspruch 1 weist eine Schaumstoffschicht und eine Barrierefolie zwischen den zwei äußeren Haftklebeschichten auf. Die eine Klebeschicht dient zur Verklebung auf dem Laminatkante und die andere auf dem Rahmen. Das Klebeband wird bevorzugt mit der einen Klebeschicht auf die Laminatkante gedrückt und dann auf die Laminatoberseite und/oder Laminatunterseite umgeschlagen. Es hat sich gezeigt, dass bei einer guten Barriereschicht und ausreichender Haftung der Klebemasse die Diffusion von Wasser durch die Klebeschicht zum Schwachpunkt der Barriere wird. Daher ist der Diffusionsquerschnitt bevorzugt so gering wie möglich auszugestalten und der Diffusionsweg besonders lang, das heißt dass das Klebeband möglichst nicht nur auf die Laminatkante sondern auch auf Glasplatte und die Rückseite geklebt wird. Um den Diffusionsquerschnittgering auszubilden, beträgt die Dicke der Klebeschicht vorzugsweise weniger als 100 µm, besonders bevorzugt weniger als 60 µm.

Barrierefolie und Schaumstoffschicht des Klebebandes haben vorzugsweise die gleiche Breite, um die Herstellung einfach zu gestalten. In einer besonderen Ausführungsform kann jedoch die Schaumstoffschicht oder vorzugsweise die Barrierefolie an der Kante des Klebebandes überstehen.

In einer weiter bevorzugten Ausgestaltung entsteht eine Schaumstoffschicht vorzugsweise erst nach Applikation des Klebebandes eines Schäumungsmittels. in einer Polymerschicht. Sobald die Aktivierung, beispielsweise durch Wärmezufuhr erfolgt ist bilden sich geschlossene Zellen innerhalb der Polymerschicht und damit die Schaumstoffschicht. Die Aktivierung erfolgt bevorzugt erst nach dem Einsetzen des Laminats in den Rahmen, um eine mechanische Belastung beim Einsetzen zu vermeiden. Durch das Aufschäumen wird eine besonders gute Dichtigkeit zwischen Klebeband und Rahmen beziehungsweise Laminat erreicht. Bilden sich an den Stoßkanten kleine Kanäle durch geringfügig zu kurze Klebebandstreifen, so werden diese durch den Prozess der Schäumung abgedichtet.

In einer alternativen Ausgestaltung gemäß Patentanspruch 4 weist das Klebeband keine zusätzliche Schaumstoffschicht oder aufschäumbare Polymerschicht auf, vielmehr ist mindestens eine der Klebeschichten selbst derart ausgebildet, dass sie die Funktion der Schaumstoffschicht übernimmt. Dies geschieht dadurch, dass in der Klebeschicht ein Schäumungsmittel enthalten ist, welches nach dem Aufschäumen zu einer Klebeschicht mit geschlossen Zellen innerhalb derselbigen führt. Die Aktivierung erfolgt bevorzugt durch Wärmezufuhr.

Bevorzugt wird eine Ausführungsform, bei der die das Schäumungsmittel enthaltende Polymerschicht beziehungsweise Klebemasse nach Aufschäumung ein um mindestens 30%, bevorzugt um mindestens 50%, vergrößertes Volumen aufweist.

Bevorzugt geeignet ist eine Ausführungsform, bei der die Schaumstoffschicht oder die aufschäumbare Polymerschicht oder Klebemasse nach dem Aufschäumen eine Schichtdicke im Bereich von etwa 100 µm bis etwa 3000 µm aufweist.

Bei beiden Alternativen des Klebebandes können zusätzlich zu den beschriebenen Schichten noch weitere Schichten vorgesehen sein. In bevorzugter Ausgestaltung erfolgt die Verbindung der Barrierefolie an die Schaumstoffschicht durch eine weitere Klebeschicht. Zur Verbesserung der Haftung zwischen Klebstoff und mindestens einer der Schichten wird eine physikalische Vorbehandlung wie Corona oder Plasma und/oder einer chemischen Haftvermittlungsschicht bevorzugt.

Ferner werden die Klebeschichten üblicherweise mit einem Liner (zum Beispiel Silikontrennpaper oder Trennfolie) abgedeckt, welcher vor der Applikation entfernt wird.

Als Klebemassen können sowohl Haftkleber als auch wärmeaktivierbare Kleber verwendet werden. Haftkleber in diesem Sinne schließen auch solche Kleber ein, welche bei Raumtemperatur nicht oder nur wenig haftklebrig sind, aber haftklebrige Eigenschaften oberhalb Raumtemperatur aufweisen. Insbesondere wenn eine leichte Applizierbarkeit in Vordergrund steht, sind jedoch solche Haftkleber bevorzugt, welche bereits bei 23°C haftklebrig sind,.Wärmeaktvierbare Kleber eignen sich insbesondere dann, wenn allein schon für die Aktivierung des Schäumungsmittels eine Erwärmung erforderlich ist. Ferner können die jeweils in einem Klebeband enthaltenen Klebeschichten durchaus verschieden ausgebildet sein, also unterschiedliche Klebmassenzusammensetzung enthalten oder unterschiedliche Schichtdicken etc. aufweisen. Klebebänder im Sinne dieser Erfindung sind Klebebandrollen sowie Abschnitte hiervon. Abschnitte welche mit einem Liner abgedeckt sind werden auch verkehrsüblich als Etiketten bezeichnet und werden hiermit ausdrücklich eingeschlossen. Bevorzugt wird jedoch ein Klebeband in Rollenform.

Als Schäumungsmittel eignen sich insbesondere Mikroballons, die in einer Polymerschicht, insbesondere einer Klebeschicht, enthalten sind. Mittels Mikroballons geschäumte (Selbst-)Klebemassen sind seit langem bekannt und beschrieben (DE 10 2004 037 910 A1). Sie zeichnen sich durch eine definierte Zellstruktur mit einer gleichmäßigen Größenverteilung der Schaumzellen aus. Es bilden sich dabei geschlossenzellige Mikroschäume ohne Kavitäten, wodurch im Vergleich zu offenzelligen Varianten eine bessere Dichtung empfindlicher Güter gegen Staub und flüssige Medien erzielt werden kann.

Bei Mikroballons handelt es sich insbesondere um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Durch ihre flexible, thermoplastische Polymerschale besitzen derartige Schäume eine höhere Anpassungsfähigkeit als solche, die mit nicht expandierbaren, nicht polymeren Mikrohohlkugeln (wie z.B. Glashohlkugeln) gefüllt sind. Ferner eignen sich derartige Schäume besser zum Ausgleich von Fertigungstoleranzen, wie sie zum Beispiel bei Spritzgussteilen die Regel sind und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für PSA-Schäume kombiniert werden.

Klassisch chemisch oder physikalisch geschäumte Materialien sind demgegenüber für ein irreversibles Zusammenfallen unter Druck und Temperatur anfälliger. Auch die Kohäsionsfestigkeit ist hier niedriger.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 µm bis 45 µm Durchmesser im unexpandierten Zustand) und ihre zur Expansion benötigten Starttemperatur (75°C bis 220 °C) differenzieren. Wenn der Mikroballontyp beziehungsweise die Schäumungstemperatur auf das zur Massecompoundierung benötigte Temperaturprofil und die Maschinenparameter abgestimmt ist, kann die Massecoumpondierung und Beschichtung so durchgeführt werden, das die Mikroballons bei der Verarbeitung nicht aufschäumen und ihr gesamtes Expansionspotential für die Anwendung erhalten bleibt.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Schäumung von Klebemassen besonders geeignet.

Neben mit Mikroballons geschäumten Polymeren bzw. Klebemassen eigen sich auch hervorragend andere Schäume die in Form einer Schaumstoffschicht in dem Klebeband bereitgestellt werden. Insbesondere geeignet sind strahlenvernetzte geschlossenzellige EVA- und insbesondere Polyethylen-Schäume wie sie zum Beispiel von Sekisui-Alveo angeboten werden. Weiterhin können auch Schäume aus Polypropylen, Polyurethan oder Chloroprenkautschuk eingesetzt werden.

Besonders geeignet für die Anwendung in Solarmodulen sind Schäume mit einem Raumgewicht von mindestens 50 kg/m³, vorzugsweise von mindestens 67 kg/m³. Ferner sollten die Schäume ein Raumgewicht von 500 kg/m3 möglichst nicht überschreiten. Besonders bevorzugt beträgt das Raumgewicht der Schäume maximal 200 kg/m³.

Als Haftkleber für die Außenschichten geeignet sind zum Beispiel solche auf Basis von Polyisobutylen, Butylkautschuk hydrierten Styrolblockcopolymeren, spezielle Polyolefine, Lösungsmittel- und Hotmelt-Acrylatpolymerisate

Die Haftklebemasse kann durch chemische Vernetzung und/oder durch Elektronenund/oder UV-Bestrahlung, vernetzt werden.

Als Klebrigmacher können Klebharze eingesetzt werden. Geeignete Klebharze sind Harze auf Basis von Kolophonium oder Kolophoniumderivaten, Polymerisate des Dicyclopentadiens, von aliphatischen sogenannten C5- oder aromatischen sogenannten C9-Kohlenwasserstoffharze, α-Pinen, ß-Pinen oder δ-Limonen. Vorgenannte Klebharze können sowohl allein als auch im Gemisch eingesetzt werden. Bevorzugt werden Harze die zumindest zum Teil besonders bevorzugt aber vollständig hydriert sind.

Als weitere Additive für Klebmassen können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockerstärkerharze sowie
- Weichmacher wie flüssiges Polyisobutylen, Mineralöl oder Flüssigharze

In einer bevorzugten Ausführungsform basiert mindestens eine Klebmasse auf einem Polyacrylat oder einem EVM (Ethylenvinylacetatelastomer), diese zeichnen sich durch hohe Alterungsstabilität, guter Verfügbarkeit und sehr hoher Verklebungsfestigkeit aus.

Besonders bevorzugt sind Klebmassen aus teilkristallinen Polyolefinen mit einer Dichte zwischen 0,86 und 0,89 g/cm³, vorzugsweise zwischen 0,86 und 0,88 g/cm³, besonders bevorzugt zwischen 0,86 und 0,87 g/cm³, und einem Kristallitschmelzpunkt von mindestens 90°C, vorzugsweise von mindestens 115°C, besonders bevorzugt von mindestens 135°C. Ferner werden die teilkristallinen Polyolefine in bevorzugter Ausgestaltung mit mindestens einem Klebharz kombiniert. Solche völlig neuartigen Klebmassen weisen eine hohe Alterungsbeständigkeit, niedrige Kosten und einen im Vergleich zu konventionellen Haftklebern wie Polyacrylat viel niedrigen spezifischen Durchgangswiderstand und WVTR-Wert auf. Je größer die Harzemenge ist oder desto höher der Erweichungspunkt des Harzes liegt desto niedriger fällt der WVTR-Wert aus.

Die eingesetzte Barrierefolie zeichnet sich durch eine geringe Wasserdampfpermeation aus, um die empfindlichen Laminatkante zu schützen zu können. Unter Permeation versteht man den Vorgang, bei dem ein Stoff (Permeat) einen Festkörper durchdringt oder durchwandert. Die Triebkraft ist ein Konzentrationsgradient. Zur Charakterisierung der Barrierewirkung wird üblicherweise die die Wasserdampftransmissionsrate WVTR (Water Vapor Transmission Rate) angegeben. Diese Rate gibt dabei den flächen- und zeitbezogenen Fluss von Wasserdampf durch einen flächigen Gegenstand unter spezifischen Bedingungen von Temperatur und Partialdruck sowie ggf. weiterer Messbedingungen wie relativer Luftfeuchtigkeit an. Je geringer der WVTR-Wert ist, desto besser ist das jeweilige Material zur Kapselung geeignet. Unter Barrierefolie im Sinne dieser Erfindung verstehen wir solche welche eine WVTR von weniger als 5 vorzugsweise weniger als 0,7 und besonders bevorzugt weniger als 0,01 g/m².d gemessen bei 37,8 °C und 90 % relativer Feuchte haben (d = day = 24 h).

Die Barrierewirkung kann durch Zugabe von Füllstoffen, insbesondere von plättchenförmigen Füllstoffen wie Talkum, verbessert werden, weil diese Teilchen bei der Extrusion ausgerichtet werden können. Eine dabei gebildete Schichtstruktur führt zur Verlängerung des Diffusionsweges. Die Teilchen selbst sind wie Glas völlig undurchlässig für Gase. Bei Bedürfnis nach Transparenz können solche Füllstoffe nanoskalig sein.

Es werden Barrierefolien mit 0,5 µm bis 120 µm Dicke verwendet um eine hinreichende Permeationswirkung zu erzielen aber ohne die Steifigkeit des Klebebandes allzu sehr zu vergrößern.

Geeignet sind Folien aus einem Folienteil, der von zumindest einer Kunststofffolie aus Polyester gebildet wird, sowie einem auf dem Folienteil aufgebrachten metallischen Teil, der aus einer metallischen Schicht aus insbesondere Aluminium gebildet wird. Die untere Klebeschicht ist bevorzugt auf der freiliegenden Seite der metallischen Schicht aufgebracht.

In einer ersten vorteilhaften Ausführungsform der Erfindung weist die metallische Schicht eine Dicke von 10 nm bis 50 µm auf, insbesondere 20 nm bis 25 µm. Das Aufbringen der metallischen Schicht auf den Folienteil geschieht beispielsweise durch Bedampfen, also indem ein Überzug auf der Kunststofffolie durch thermisches Verdampfen im Vakuum (rein thermisch, elektrisch mit Elektronenstrahlen, durch Kathodenzerstäubung oder Drahtexplosion, gegebenenfalls mit Hilfe von Laser-Strahlen) erzeugt wird.

Weitere Einzelheiten, Ziele, Merkmale und Vorteile der Erfindung werden nachfolgend anhand eines Ausführungsbeispiels näher erläutert. In der Zeichnung zeigt
- Fig. 1: eine schematische Darstellung eines Testlaminats zur Bestimmung der Leitfähigkeit,
- Fig. 2: die Randverklebung eines PV-Moduls in schematischer Darstellung,
- Fig. 3: den Messaufbau zur Bestimmung der Leitfähigkeit.

### Permeationsmessung mit Spülgasmethode

In einer entsprechenden Messzelle für Rohre, Folien und Membranen können diese sowohl mit beliebigen Gasen als auch mit Flüssigkeiten aller Art auf ihre Durchlässigkeit überprüft werden. Die Messtechniken für Gase beinhalten alle ein zentrales Modul, das von der zu testenden Membran geteilt wird: Auf der "Feed-Seite" wird die Messzelle mit dem Prüfgas überströmt, das übrige Retentat wird abgeleitet. Die auf der anderen Seite angekommene Menge des Gases (Permeat) wird vom Spülgas zu einem Detektor geführt, wo die Konzentration gemessen wird. Ober- und Unterteil der Zelle umschließen die zentrierte Membran. Ein O-Ring, der auf der Probe aufliegt, dichtet die Grenzfläche ab. Diese Art von Zellen ist meist aus Metall wie z. B. Edelstahl gefertigt.

### Leifähigkeitsmessung:

Für die Messung der Leitfähigkeit wurde folgender Messkörper mit den Dimensionen 195 mm x 50 mm hergestellt. Der Messkörper (Laminat (1)) weist auf: eine 4,2 mm dicke Glasschicht (2), 2 Lagen 460 µm EVA-Folie (3, 4) (Etimex Vistasolar FC 486.10), zwischen denen sich eine 50 µm dicke und 25 mm breite Aluminiumfolie (5) befindet, und eine 23 µm Polyesterfolie (6) als Rückseitenfolie. Die Aluminiumfolie (5) wurde in 17 mm Abstand an den kurzen Seiten des Laminats durch eine EVA-Folie (4) und die Rückseitenfolie (6) geführt; zur langen Kante hat die Aluminiumfolie (5) einen Abstand von 17 mm. Die Dicke des Laminats (1) beträgt 5 mm. Das beschriebene Laminat (1) wurde wie folgt hergestellt:
1) 2,5 Minuten bei 40°C, evakuieren auf 20 mbar
2) Bodentemperatur wird innerhalb von 3,5 Minuten von 40°C auf 133°C erhöht, gleichzeitig wird die obere Laminatorfläche auf das Modul gedrückt bis 780 mbar erreicht sind
3) Beim Erreichen von 780 mbar wird eine Vernetzung 13 Minuten bei 133°C und 780 mbar durchgeführt
4) Das Laminat wird für ca. 7 Minuten auf 40°C abgekühlt.

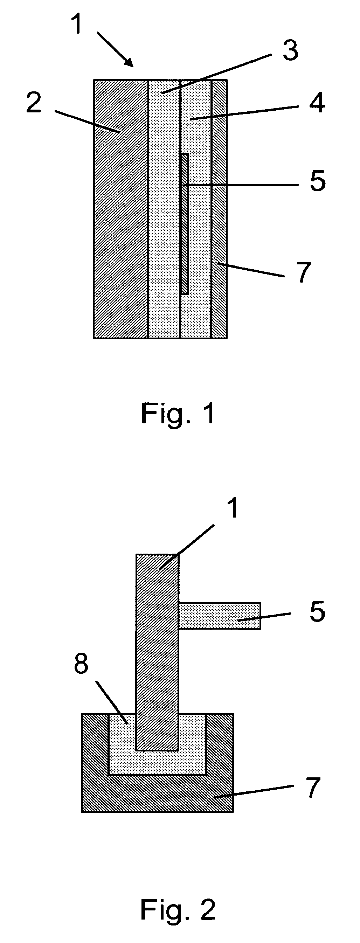

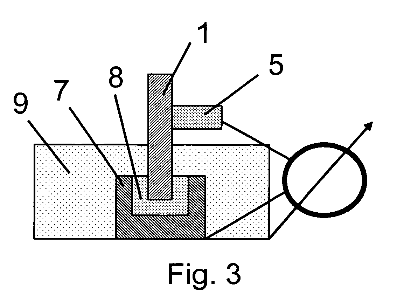

In ein Aluminium U- Profil (Fig. 2) mit einer Nut von 6 mm und einer Tiefe von 10 mm aus 2 mm dicken Aluminium (kurz Rahmen (7)) wird das Laminat (1), welches an der Kante und an der Ober- und Unterseite mit dem zu untersuchenden Klebeband (8) in 19 mm Breite versehen wurde, gepresst. Die Kanten des Laminats (1), welche nicht durch den Rahmen (7) geschützt sind, wurden mit Silikon versiegelt (Firma Lugato "Wie Gummi" Bad-Silikon). Der Messkörper wird mit dem Rahmen (7) in eine Tensid- Lösung (9) aus Liqui Nox/ destilliertem Wasser (1:500) erhältlich bei Alconox,White Plains, NY 10603 gestellt (Fig. 3), nach 2 min. wird mit ein Terraohmmeter (Megaohmmeter Insulation Tester MD 508) bei 500 V der Durchgangswiderstand gemessen.

### Beispiel 1 (Vergleich)

Ein Klebeband mit einem 1000 µm dicken PE Schaum (Alveo) mit einem Raumgewicht von 67 kg/m³ wird coronabehandelt und dann beidseitig mit je 50 g/m² einer harzmodifizierten Klebemasse (tesa 4957) ausgerüstet und vermessen.

| | |
|---|---|
| Permeation von Wasser: | 12g/m² d |
| Leifähigkeitsmessung: | Kurzschluss (Widerstand <0,1 kOhm) |

Das Klebeband hat keine genügende Barrierewirkung, es kann Wasser in die Fuge diffundieren und den Leiter (Aluminiumfolie) mit dem Rahmen kurzschließen.

### Beispiel 2 (Vergleich)

Ein Klebeband mit einem 1000 µm dicken PE Schaum mit einem Raumgewicht von 67 kg/m³ wird coronabehandelt und dann beidseitig mit je 50 g/m² einer harzmodifizierten Klebemasse (tesa 4957) ausgerüstet. Ferner wird das Klebeband auf der der Laminatkante zugewandten Seite mit einer 23 µm Polyesterfolie und einer zusätzlichen Klebmasseschicht, welche identisch ist mit den oben genannten, versehen. Man erhält folgenden Produktaufbau:
a) Klebemasse
b) Schaum
c) Klebemasse
d) Polyesterfolie
e) Klebemasse

Die Klebemasse e) ist dabei der Laminatkante zugewandt.

| | |
|---|---|
| Permeation von Wasser: | 10g/m² d |
| Leifähigkeitsmessung: | Kurzschluss (Widerstand <0,1 kOhm) |

Das Klebeband hat keine genügende Barrierewirkung, es kann Wasser in die Fuge des Laminats diffundieren und den Leiter (Aluminiumfolie) mit dem Rahmen kurzschließen.

### Beispiel 3 (erfindungsgemäß)

Ein Klebeband mit einem 1000 µm dicken PE Schaum mit einem Raumgewicht von 67 kg/m³ wird coronabehandelt und dann beidseitig mit je 50 g/m² einer harzmodifizierten Klebemasse (tesa 4957) ausgerüstet. Zusätzlich wird auf der der Laminatkante zugewandten Seite eine 23 µm Polyesterfolie, welche mit einer 20 nm starken Aluminiumschicht bedampft wurde (Donmore Europe in 79111 Freiburg) und eine zusätzliche Klebmasseschicht, welche identisch ist mit den oben genannten aufgebracht. Man erhält folgenden Produktaufbau:
a) Klebemasse
b) Schaum
c) Klebemasse
d) Polyesterfolie metallisiert
e) Klebemasse

Die Klebemasse e) ist der Laminatkante zugewandt.

| | |
|---|---|
| Permeation von Wasser: | 1 g/m² d |
| Leifähigkeitsmessung: | 25 MOhm |

Das Klebeband hat eine ausreichende Barrierewirkung, es kann kein Wasser/-dampf in die Fuge des Laminates diffundieren und den Leiter (Aluminiumfolie) mit dem Rahmen kurzschließen.

### Beispiel 4 (erfindungsgemäß)

Ein Klebeband mit einem 1000 µm dicken PE Schaum mit einem Raumgewicht von 67 kg/m³ wird coronabehandelt und dann beidseitig mit je 50 g/m² einer harzmodifizierten Klebemasse (tesa 4957) ausgerüstet. Zusätzlich wird auf der der Laminatkante zugewandten Seite eine 12 µm Polyesterfolie mit einer 12 µm Aluminiumfolie (Alcan Packaging Singen GmbH in 78221 Singen) und eine zusätzliche Klebmasseschicht, welche identisch ist mit der oben genannten aufgebracht. Man erhält folgenden Produktaufbau:
a) Klebemasse
b) Schaum
c) Klebemasse
d) 12 µm Polyesterfolie/Kaschierkleber/12 µm Aluminiumfolie
e) Klebemasse

Die Klebemasse e) ist der Laminatkante zugewandt.

| | |
|---|---|
| Permeation von Wasser: | 0,6 g/m² d |
| Leifähigkeitsmessung: | 225 MOhm |

Das Klebeband hat eine ausreichende Barrierewirkung, es kann kein Wasser/-dampf in die Fuge des Laminats diffundieren und den Leiter (Aluminiumfolie) mit dem Rahmen kurzschließen.

### Beispiel 5 (erfindungsgemäß)

Ein Klebeband wird gemäß Beispiel 4 hergestellt, wobei als Haftklebemassen jeweils eine Masse folgender Zusammensetzung eingesetzt wird:
a) 24 Gew.-Teile Notio PN 0040 (Copolymer aus Propylen, Buten-(1) und 4-Methylpenten-(1), Schmelzindex 4g/10min, Dichte 0,868 g/cm³, Biegemodul 42 MPa, Kristallitschmelzpunkt 159°C, Schmelzwärme 5,2 J/g)
b) 20 Gew.-Teile Oppanol B10 (flüssiger Polyisobutenweichmacher, Dichte = 0,93 g/cm³; Mₙ = 40000 g/mol)
c) 54 Gew.-Teile Regalite 1100 (voll hydriertes C9-Kohlenwasserstoffharz, Schmelzpunkt 100°C, Polydispersität 1,4) und
d) 2 Gew.-Teile Irganox 1076 (phenolisches Antioxidant)

| | |
|---|---|
| Permeation von Wasser: | 0,1 g/m².d |
| Leifähigkeitsmessung: | 430 MOhm |

Das Klebeband hat eine verbesserte Barrierewirkung welches die Bedeutung der Zusammensetzung der Klebemasse für die Diffusion von Wasser durch die nach assen offen liegende Klebemassenkante unterstreicht.

## Patentansprüche

1. Verwendung eines Klebebands zur Verklebung optoelektronischer Bauteile mindestens aufweisend eine Schaumstoffschicht und zwei Klebschichten auf der Außenseite,
wobei die Schaumstoffschicht zwischen der oberen und der unteren Klebeschicht angeordnet ist
**dadurch gekennzeichnet,**
**dass** zwischen den Klebstoffschichten zusätzlich eine Barrierefolie, die aus einem Folienteil, der von einer Kunststofffolie aus Polyester gebildet wird, und einer auf dem Folienteil aufgebrachten metallischen Schicht besteht, vorhanden ist, die einen WVTR von weniger als 5 g/m².d gemessen bei 37,8 °C und 90 % relativer Feuchte und eine Dicke 0,5 bis 120 µm aufweist.

2. Verwendung nach Anspruch 1, **dadurch gekennzeichnet,**
**dass** zwischen der Schaumstoffschicht und der Barrierefolie, insbesondere unmittelbar zwischen der Schaumstoffschicht und der Barrierefolie, eine weitere Klebeschicht angeordnet ist.

3. Verwendung nach Anspruch 1 oder 2, **dadurch gekennzeichnet,**
**dass** die Schaumstoffschicht gebildet ist durch eine ein Schäumungsmittel enthaltende Polymerschicht.

4. Verwendung eines Klebebands zur Verklebung optoelektronischer Bauteile aufweisend zwei Klebschichten auf der Außenseite,
wobei mindestens eine Klebeschicht gebildet ist durch eine ein Schäumungsmittel enthaltende Polymerschicht,
**dadurch gekennzeichnet,**
**dass** zwischen den Klebstoffschichten zusätzlich eine Barrierefolie, die aus einem Folienteil, der von einer Kunststofffolie aus Polyester gebildet wird, und einer auf dem Folienteil aufgebrachten metallischen Schicht besteht, vorhanden ist, die einen WVTR von weniger als 5 g/m².d gemessen bei 37,8 °C und 90 % relativer Feuchte und eine Dicke 0,5 bis 120 µm aufweist.

5. Verwendung nach Anspruch 3 oder 4, **dadurch gekennzeichnet,**
**dass** die Polymerschicht durch Wärmezufuhr aufschäumbar ist.

6. Verwendung nach einem der Ansprüche 3 bis 5 **dadurch gekennzeichnet, dass** die das Schäumungsmittel enthaltende Polymerschicht nach Aufschäumung ein um mindestens 30%, bevorzugt um mindestens 50% vergrößertes Volumen aufweist.

7. Verwendung nach einem der Ansprüche 1 bis 6 **dadurch gekennzeichnet, dass** die Schaumstoffschicht oder die aufschäumbare Polymerschicht oder Klebemasse nach dem Aufschäumen eine Schichtdicke im Bereich von 100 µm bis 3000 µm aufweist.

8. Verwendung nach einem der Ansprüche 1 bis 7, **dadurch gekennzeichnet,**
**dass** die Barrlerefolie einen WVTR-Wert von weniger als 0,7 g/m²d, bevorzugt von weniger als 0,01 g/m²d aufweist, gemessen bei 37,8 °C und 90 % relativer Feuchte.

9. Verwendung nach einem der Ansprüche 1 bis 8, **dadurch gekennzeichnet,**
**dass** die Barrierefolie eine metallische Schicht in Form einer metallischen Bedampfung, vorzugsweise, dass die metallischen Schicht eine Dicke im Bereich von 10 nm bis etwa 50 µm, besonders bevorzugt Im Bereich von 20 nm bis 25 µm aufweist.

10. Verwendung nach einem der Ansprüche 1 bis 9; **dadurch gekennzeichnet,**
**dass** die Barrierefolie mehrlagig ausgebildet ist,
vorzugsweise, dass die Barrierefolie eine metallische Schicht zwischen einer ersten und einer zweiten Polymerschicht aufweist.

11. Verwendung nach einem der Ansprüche 1 bis 10, **dadurch gekennzeichnet,**
**dass** die Barrierefolie eine Polymerschicht mit einem spezifischen Durchgangswiderstand gemessen nach dem angegebenen Testverfahren bei 20 °C von mindestens 10¹⁸Ωcm aufweist.

12. Verwendung nach einem der Ansprüche 1 bis 11, **dadurch gekennzeichnet,**
**dass** die Barrierefolie eine Polymerschicht aus einem Polyolefin, vorzugsweise einem Homo-, Co- oder Terpolymer des Ethylens oder Propylens, aufweist, weiter vorzugsweise, dass die Polymerschicht verstreckt ist.

13. Verwendung eines Klebebandes gemäß einem der Ansprüche 1 bis 12 zur Verklebung eines Photovoltaik-Laminats in den Rahmen eines Photovoltaik-Moduls.

## Claims

1. Use of an adhesive tape for bonding optoelectronic components at least comprising a foam layer and two adhesive layers on the outside,
the foam layer being disposed between the upper and lower adhesive layers,
**characterized in that**
between the layers of adhesive there is additionally a barrier film, consisting of a film part formed by a polymeric film of polyester and by a metallic layer which is applied to the film part, which has a WVTR of less than 5 g/m².d as measured at 37.8°C and 90% relative humidity, and a thickness of 0.5 to 120 µm.

2. Use according to Claim 1, **characterized in that** between the foam layer and the barrier film, more particularly directly between the foam layer and the barrier film, there is a further adhesive layer.

3. Use according to Claim 1 or 2, **characterized in that**
the foam layer is formed by a polymer layer comprising a foaming agent.

4. Use of an adhesive tape for bonding optoelectronic components comprising two adhesive layers on the outside,
at least one adhesive layer being formed by a polymer layer comprising a foaming agent,
**characterized in that**
between the layers of adhesive there is additionally a barrier film, consisting of a film part formed by a polymeric film of polyester and by a metallic layer which is applied to the film part, which has a WVTR of less than 5 g/m².d as measured at 37.8°C and 90% relative humidity, and a thickness of 0.5 to 120 µm.

5. Use according to Claim 3 or 4, **characterized in that** the polymer layer can be foamed by supply of heat.

6. Use according to any of Claims 3 to 5,
**characterized in that** the polymer layer comprising the foaming agent exhibits, after foaming, a volume increased by at least 30%, preferably by at least 50%.

7. Use according to any of Claims 1 to 6,
**characterized in that** the foam layer or the foamable polymer layer or adhesive, after foaming, has a layer thickness in the range from 100 µm to 3000 µm.

8. Use according to any of Claims 1 to 7,
**characterized in that** the barrier film has a WVTR of less than 0.7 g/m²d, preferably of less than 0.01 g/m²d, measured at 37.8°C and 90% relative humidity.

9. Use according to any of Claims 1 to 8, **characterized in that**
the barrier film has a metallic layer in the form of a vapour-deposited metallic layer,
preferably **in that** the metallic layer has a thickness in the range from 10 nm to about 50 µm, more preferably in the range from 20 nm to 25 µm.

10. Use according to any of Claims 1 to 9,
**characterized in that**
the barrier film is of multi-ply construction, preferably **in that** the barrier film has a metallic layer between a first polymer layer and a second polymer layer.

11. Use according to any of Claims 1 to 10,
**characterized in that**
the barrier film has a polymer layer having a specific volume resistance measured according to the stated test method at 20°C of at least 10¹⁶ Ωcm.

12. Use according to any of Claims 1 to 11,
**characterized in that**
the barrier film comprises a polymer layer of a polyolefin, preferably a homo-, co- or terpolymer of ethylene or of propylene,
with further preference **in that** the polymer layer is oriented.

13. Use of an adhesive tape according to any of Claims 1 to 12 for bonding a photovoltaic laminate into the frame of a photovoltaic module.

## Revendications

1. Utilisation d'une bande adhésive pour le collage de composants optoélectroniques, comprenant au moins une couche de mousse et deux couches adhésives sur le côté extérieur,
la couche de mousse étant agencée entre la couche adhésive supérieure et la couche adhésive inférieure, **caractérisée en ce qu'**un film de barrière, constitué par une partie film, formée par un film plastique en polyester, et une couche métallique appliquée sur la partie film, est présent en outre entre les couches adhésives, et présente une valeur WVTR de moins de 5 g/m²·d mesurée à 37,8 °C et 90 % d'humidité relative et à une épaisseur de 0,5 à 120 µm.

2. Utilisation selon la revendication 1, **caractérisée en ce qu'**une couche adhésive supplémentaire est agencée entre la couche de mousse et le film de barrière, notamment directement entre la couche de mousse et le film de barrière.

3. Utilisation selon la revendication 1 ou 2, **caractérisée en ce que** la couche de mousse est formée par une couche polymère contenant un agent moussant.

4. Utilisation d'une bande adhésive pour le collage de composants optoélectroniques comprenant deux couches adhésives sur le côté extérieur,
au moins une couche adhésive étant formée par une couche polymère contenant un agent moussant, **caractérisée en ce qu'**un film de barrière, constitué par une partie film, formée par un film plastique en polyester, et une couche métallique appliquée sur la partie film, est présent en outre entre les couches adhésives, et présente une valeur WVTR de moins de 5 g/m²·d mesurée à 37,8 °C et 90 % d'humidité relative et à une épaisseur de 0,5 à 120 µm.

5. Utilisation selon la revendication 3 ou 4, **caractérisée en ce que** la couche polymère peut être moussée par apport de chaleur.

6. Utilisation selon l'une quelconque des revendications 3 à 5, **caractérisée en ce que** la couche polymère contenant l'agent moussant présente après le moussage un volume agrandi d'au moins 30 %, de préférence d'au moins 50 %.

7. Utilisation selon l'une quelconque des revendications 1 à 6, **caractérisée en ce que** la couche de mousse ou la couche polymère moussable ou la masse adhésive présente après le moussage une épaisseur de couche dans la plage allant de 100 µm à 3 000 µm.

8. Utilisation selon l'une quelconque des revendications 1 à 7, **caractérisée en ce que** le film de barrière présente une valeur WVTR de moins de 0,7 g/m²·d, de préférence de moins de 0,01 g/m²·d, mesurée à 37,8 °C et 90 % d'humidité relative.

9. Utilisation selon l'une quelconque des revendications 1 à 8, **caractérisée en ce que** le film de barrière comprend une couche métallique sous la forme d'un dépôt par évaporation métallique, de préférence **en ce que** la couche métallique présente une épaisseur dans la plage allant de 10 nm à environ 50 µm, de manière particulièrement préférée dans la plage allant de 20 nm à 25 µm.

10. Utilisation selon l'une quelconque des revendications 1 à 9, **caractérisée en ce que** le film de barrière est configuré à plusieurs couches, de préférence **en ce que** le film de barrière comprend une couche métallique entre une première et une seconde couche polymère.

11. Utilisation selon l'une quelconque des revendications 1 à 10, **caractérisée en ce que** le film de barrière comprend une couche polymère ayant une résistance en volume spécifique mesurée par le procédé d'essai indiqué à 20 °C d'au moins 10¹⁶ Ωcm.

12. Utilisation selon l'une quelconque des revendications 1 à 11, **caractérisée en ce que** le film de barrière comprend une couche polymère en une polyoléfine, de préférence un homo-, co- ou terpolymère d'éthylène ou de propylène, de manière davantage préférée **en ce que** la couche polymère est étirée.

13. Utilisation d'une bande adhésive selon l'une quelconque des revendications 1 à 12 pour le collage d'un stratifié photovoltaïque dans le châssis d'un module photovoltaïque.
